(19) Europäisches Patentamt
European Patent Office
Office européen des brevets

(11) EP 1 580 213 A1

(12) **EUROPEAN PATENT APPLICATION**
published in accordance with Art. 158(3) EPC

(43) Date of publication:
**28.09.2005 Bulletin 2005/39**

(21) Application number: **03812317.0**

(22) Date of filing: **27.11.2003**

(51) Int Cl.[7]: **C08G 75/04**, C08L 81/02, C08K 3/00, C08K 5/5415

(86) International application number:
**PCT/JP2003/015141**

(87) International publication number:
**WO 2004/050743 (17.06.2004 Gazette 2004/25)**

(84) Designated Contracting States:
**AT BE BG CH CY CZ DE DK EE ES FI FR GB GR HU IE IT LI LU MC NL PT RO SE SI SK TR**

(30) Priority: **03.12.2002 JP 2002350767**

(71) Applicant: **IDEMITSU KOSAN CO., LTD.**
**Tokyo 100-8321 (JP)**

(72) Inventors:
- **HIGUCHI, Hiroyuki**
  **Ichihara-shi, Chiba 299-0107 (JP)**
- **SENGA, Minoru**
  **Ichihara-shi, Chiba 299-0107 (JP)**
- **TSUBOKURA, Yutaka**
  **Ichihara-shi, Chiba 299-0107 (JP)**

(74) Representative:
**Gille Hrabal Struck Neidlein Prop Roos**
**Patentanwälte**
**Brucknerstrasse 20**
**40593 Düsseldorf (DE)**

(54) **POLYARYLENE SULFIDE RESIN, COMPOSITION THEREOF, AND PROCESSES FOR PRODUCING THESE**

(57) A polyarylene sulfide resin which has an index of coupling reactivity at 320°C of 2.0 or lower and an amount of $SO_2$ generated therefrom at 300°C of 0.02 mg/g or smaller; and a process for producing the polyarylene sulfide resin, which comprises polymerizing a polyfunctional halogenated aromatic compound with lithium sulfide in an aprotic organic solvent, and then washing the resultant polymer in a molten state. A composition comprising the polyarylene sulfide resin obtained by such process and an inorganic filler is reduced in unevenness of fluidity between lots and is reduced in sulfur odor emission during molding.



Printed by Jouve, 75001 PARIS (FR)

## Description

Technical Field

The present invention relates to a polyarylene sulfide resin, a composition containing the resin and a process for producing these resin and composition.

Background Art

A polyphenylene sulfide resin that is a major polymer among polyarylene sulfide resins has been used for automobiles, electric/electronic parts and the like by making use of its excellent heat resistance, flame retardancy, rigidity, solvent resistance and electric insulation.

In particular, many polyphenylene sulfide resins are combined with inorganic fillers to form composite materials for use. Generally, the composite is formed in an extruder. At this time, the resin is often increased in molecular weight. The degree of the increase in molecular weight is easily varied according to the delicate variations in kneading conditions (e.g. , temperature in the extruder and retention time of the resin). As a consequence, a resin composition using such a resin poses the problem that there is a difference in fluidity between lots. Then, this problem is more significant in a composition using a polyarylene sulfide resin which has high coupling reactivity and tends to be increased in molecular weight (see, for example, the publication of Japanese Patent Application Laid-Open (JP-A) No. 6-256517). In order to solve this problem, a resin composition which is somewhat improved in the variation in fluidity has been disclosed. It is however desired to further improve a resin composition (see, for example, JP-A No. 11-335559 and JP-A No. 2000-80275).

On the other hand, a distinctive sulfur odor is spread over a field where a polyarylene sulfide based material is molded and there is therefore a fear as to the influence of this sulfur odor on the human body when an operator works for a long time. For example, in the case of the resin composition described in JP-A No. 6-256517, an intensive sulfur odor is emitted during molding, so that the molding working circumstance is put in an unfavorable state. In the case of the resin compositions described in each JP-A Nos. 11-335559 and 2000-80275, a lot of sulfur odors still exist during molding.

The present invention has been made in view of the above situation and it is an object of the present invention to provide a polyarylene sulfide resin which is reduced in the variation in fluidity between lots and in sulfur odor emission during molding, a composition containing the resin and processes for producing these resin and composition.

Disclosure of the Invention

The present inventors have made earnest studies to attain the above object and, as a result, found that it is effective to decrease the index of coupling reactivity of and the amount of $SO_2$ generated from a polyarylene sulfide resin to specified values or less respectively, to complete the present invention.

The present invention provides the following polyarylene sulfide resin, composition thereof and the like.

1. A polyarylene sulfide resin having an index of coupling reactivity at 320°C of 2.0 or less,
   the amount of $SO_2$ generated from the resin at 300°C being 0.02 mg/g or less.
2. A process for producing a polyarylene sulfide resin according to the above 1, the process comprising polymerizing a polyfunctional halogenated aromatic compound with lithium sulfide in a non-protonic organic solvent.
3. A process for producing a polyarylene sulfide resin according to the above 2, the process further comprising washing the polymer in a molten state after the polymerization.
4. A process for producing a polyarylene sulfide resin according to the above 3, the process further comprising adding a silane based coupling agent to the washed polymer and melt-kneading the mixture.
5. A polyarylene sulfide resin composition comprising a polyarylene sulfide resin according to the above 1 and an inorganic filler.
6. A polyarylene sulfide resin composition according to the above 5, the composition further comprising a silane based coupling agent.
7. A process for producing a polyarylene sulfide resin composition according to the above 6, the process comprising:

   blending a polyarylene sulfide resin according to the above 1 with an organic filler;
   melt-kneading the mixture; and
   adding a silane based coupling agent at the time of the melt-kneading.

Best Mode for Carrying out the Invention

The polyarylene sulfide resin of the present invention will be explained.

The polyarylene sulfide resin of the present invention has an index of coupling reactivity at 320 of 2.0 or less and preferably 1.5 or less. The amount of $SO_2$ generated from the resin at 300°C is 0.02 mg/g or less and preferably 0.01 mg/g or less.

When the index of coupling reactivity exceeds 2.0, the variation in fluidity between lots is increased. When the amount of $SO_2$ generated exceeds 0.02 mg/g, a sulfur odor is increased.

The polyarylene sulfide resin of the present invention has a solution viscosity of preferably 0.10 to 0.50 dl/g and more preferably 0.13 to 0.35 dl/g. The solution viscosity is measured using a Ubbelohde's viscometer in the following condition: measuring solvent: $\alpha$-chloronaphthalene, measuring concentration: 0.4 g/dl, measuring temperature: 206°C.

Also, the amount of residual alkali metals is preferably 100 ppm or less and more preferably 80 ppm or less.

No particular limitation is imposed on the structure of the polyarylene sulfide resin of the present invention insofar as the index of coupling reactivity and the amount of $SO_2$ generated fall in the above ranges. Preferable examples of the polyarylene sulfide resin include resins containing 70 mol% or more of a repeat unit represented by the formula -Ar-S- (where Ar is an aryl group). A typical example of the resin is a resin containing 70 mol% or more of a repeat unit represented by the following formula (1).

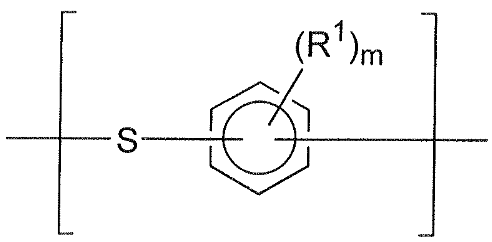

(1)

wherein, $R^1$ represents a substituent selected from the group consisting of an alkyl or alkoxy group having 6 or less carbon atoms, a phenyl group, carboxylic acids and metal salts thereof, an amino group, a nitro group and halogen atoms such as fluorine, chlorine and bromine and m denotes an integer from 0 to 4.

In the above formula (1), $R^1$ is preferably a carboxylic acid. m is preferably 0 to 2.

The polyarylene sulfide resin of the present invention may contain, besides the repeat unit represented by the formula (1), a methaphenylene sulfide unit, orthophenylene sulfide unit, p, p'-diphenylene ketone sulfide unit, p, p'-diphenylene sulfone sulfide unit, p, p'-biphenylene sulfide unit, p, p'-diphenylene ether sulfide unit, p, p'-diphenylene methylene sulfide unit, p, p'-diphenylene cumenyl sulfide unit and naphthyl sulfide unit in an amount of less than 30 mol% as a copolymer structural unit.

In the polyarylene sulfide resin of the present invention, it is preferable to reduce a disulfide structure (-S-S-) and a thiol structure (-SH) in the resin so that the index of coupling reactivity and the amount of $SO_2$ generated fall in the above ranges. However, if these structures are eliminated completely from the resin, the variation in fluidity of the resin composition is reduced but the resin composition is significantly reduced in wettability to the inorganic filler, resulting in reduced strength. For this, it is essential in the present invention to allow these structures to exist slightly in the resin to keep the balance between the variation in fluidity and strength of the resin composition.

The process of producing the polyarylene sulfide resin of the present invention will be explained by way of embodiments, which, however, are not intended to limit the present invention.

The polyarylene sulfide resin of the present invention may be produced by polymerizing a polyfunctional halogenated aromatic compound with a sulfur source in a polymerization solvent.

In the present invention, preferably, first the dihalogenated aromatic compound is polymerized with the sulfur source in a polymerization solvent to produce a straight-chain polyarylene sulfide resin (prepolymer). A tri- or more functional halogenated aromatic compound (branching agent), a dihalogenated aromatic compound, a polymerization solvent, a sulfur source and the like are added, according to need, to this prepolymer or a solution or a slurry in which this prepolymer is dissolved to run a polymerization reaction.

The solution viscosity (the same measuring condition as above) of this prepolymer is preferably 0.05 to 0.25 dl/g and more preferably 0.07 to 0.20 dl/g. When the solution viscosity is less than 0.05 dl/g, there is the possibility that low-molecular weight polyarylene sulfide resins are also produced and the distribution of molecular weight is therefore widened, with the result that gas is generated during molding and the heat resistance of a molded article is reduced. When the solution viscosity exceeds 0.25 dl/g, there is the possibility that this causes an intensive increase in the molecular weight of the polyarylene sulfide resin and it is then difficult to obtain a resin having high fluidity.

The prepolymer may be produced according to a known method of producing a straight-chain polyarylene sulfide resin. At this time, polymerization time and the like may be properly designed so as to make the solution viscosity of the prepolymer fall in the above range. For example, the polymerization time is preferably 0.1 to 4 hours and more preferably 0.1 to 2 hours though it differs depending on whether or not a polymerization adjuvant and water are present. When the polymerization time is out of the above range, the solution viscosity of the prepolymer may be out of the above range. Preferable examples of the dihalogenated aromatic compound which is used for the production of the prepolymer or is to be added to the prepolymer include para-dichlorobenzene.

As the branching agent, a known one may be used. Examples of the branching agent include polyhalo-aromatic compounds having three or more halogen substituents such as trichlorobenzene, tribromobenzene and tetrachloronaphthalene, dihalogenated aniline and dihalogenatednitrobenzene as described in JP-A No. 56-28217 . Among these compounds, particularly 1,2,4-trichlorobenzene and 1,3,5-trichlorobenzene are preferable.

The proportion of the branching agent to be added is preferably 0.05 to 0.5 mol% and more preferably 0.1 to 0.3 mol% based on the sulfur source though it is decided in accordance with the degree of branch to be desired. When the proportion of the branching agent is less than 0. 05 mol%, the fluidity may be insufficient. When the proportion exceeds 0.5 mol%, the strength and toughness may be unsatisfactory.

As the polymerization solvent, known solvents which can be used in the polymerization of a polyarylene sulfide resin may be used. Examples of the solvent include non-protonic organic solvents such as organic amide solvents as described in JP-A No. 56-28214. Among these solvents, N-methyl-2-pyrrolidone (NMP) is particularly preferable.

As mentioned above, in the process of the present invention, these polymerization solvents may be added in accordance with the situation in the polymerization. In the case where the prepolymer has a solid form, the polymerization solvent should be added in an amount enough to practice the polymerization. In the case where the prepolymer is dissolved in a solvent or has a slurry form, the polymerization solvent is unnecessarily added. The amount (mol ratio) of the polymerization solvent present in the polymerization solution is preferably 2 to 20 and more preferably 3 to 15 based on the number of mols of the repeat unit of the prepolymer.

It is essential in the present invention to keep the polymerization system in a phase-separated state. Any sulfur material may be used as the sulfur source insofar as it keeps such a phase-separated state. Examples of the sulfur source include alkali metal sulfides and alkali earth metals as described in JP-A No. 56-28217. Among these compounds, lithium sulfide is preferable . When lithium sulfide is used, LiCl, $CH_3COOM$ (M = Li, Na or the like) and $H_2O$ may be used together as a phase separating agent. If these sulfur sources are used, the amount of a disulfide structure and a thiol structure in the resin can be efficiently decreased to a preferable amount in the present invention. The amount of the sulfur source contained in the polymerization solution is preferably 10 mol% or less and more preferably 0.9 to 6 mol% based on the number of mols of the repeat unit of the prepolymer. When the amount exceeds 10 mol%, this may offer opportunity for progress of a decomposition reaction such as depolymerization. Moreover, sodium hydroxide may be added in an amount (mol ratio) of preferably 0 to 10 and more preferably 1 to 5 based on the number mols of the repeat unit of the prepolymer if necessary.

The polymerization temperature is preferably 230 to 290°C, more preferably 240 to 280°C and particularly preferably 250 to 275°C.

The polymerization time is preferably 0.1 to 24 hours, more preferably 0.5 to 10 hours and particularly preferably 0.5 to 2 hours without no particular limitation. The polymerization time is affected by polymerization temperature, the type of catalyst and the like. If the polymerization time is longer than that required, there is the possibility that the strength of the obtained resin is reduced and a part of the resin is decomposed so that a resin containing increased low-molecular weight components is obtained with economical disadvantages and poor properties.

As a method of taking the polyarylene sulfide resin of the present invention out of the reaction solution after the polymerization reaction and purifying it, the following melt washing means is preferable. Specifically, a NMP solution of a polyarylene sulfide resin is kept at 230 to 290°C and a washing liquid (water/NPM mixture solution, containing a neutralizing agent such as $NH_4Cl$ as the case may be) is injected into the solution to carry out washing, followed by separating the resin stationarily. In the present invention, the amount of a disulfide structure and a thiol structure existing in the resin can be decreased to a level suitable for the present invention considerably efficiently by this washing/separation treatment. Also, in the present invention, examples of the case of containing a neutralizing agent include the case of converting the terminal SLi group to a SH group and the case of using excess alkali (e.g. , LiOH) in the polymerization.

After purified, the obtained polyarylene sulfide resin may be passed through a kneader or the like to carry out melt-kneading, thereby pelletizing the resin. In the melt-kneading, various silane based coupling agents such as an aminosilane type, mercaptosilane type and epoxysilane type may be added. In the present invention, an aminosilane type or epoxysilane type-coupling agent is preferably used. By adding a silane type-coupling agent and melt-kneading,

it is possible to improve the strength of the molded article.

The polyarylene sulfide resin of the present invention may be combined with various inorganic fillers to prepare polyarylene sulfide resin compositions. No particular limitation is imposed on the inorganic filler which may be used in the present invention. Examples of the inorganic filler include glass fibers, carbon fibers, alamide fibers, potassium titanate whiskers, silicon carbide whiskers, mica ceramic fibers, wostonite, mica, talc, silica, alumina, kaolin, clay, silica alumina, carbon black, calcium carbonate, titanium oxide, molybdenum disulfide, graphite, iron oxide, glass beads, calcium phosphate, calcium sulfate, magnesium carbonate, magnesium phosphate, silicon nitride and hydrotalcite. Among these, glass fibers are preferable. These compounds may be used either singly or in combinations of two or more.

In the resin composition of the present invention, there is no particular limitation to the ratio of the polyarylene sulfide resin to the inorganic filler and the ratio may be appropriately adjusted in the range where the practical qualities to be intended are obtained.

The aforementioned silane based coupling agent, inorganic type pigments, organic type pigments, other resins and the like may be added in the resin composition to the extent that the advantageous effect of the present invention is not impaired. Preferable examples of the silane based coupling agent are the same as above.

Such a resin composition may be produced, for example, by blending the polyarylene sulfide resin and the inorganic filler, followed by melt-kneading. A coupling agent is preferably added during melt-kneading when a resin composition further comprising a silane based coupling agent is produced.

Because the polyarylene sulfide resin of the present invention has a coupling reactivity index of 2.0 or less, a composition containing the resin is reduced in variation of fluidity between lots, with the result that it becomes easy to control molding conditions. In particular, a resin composition containing glass fibers, a coupling agent is usually applied to the surface of the glass fibers and contributes to an increase in the molecular weight of the resin. A resin highly reactive with the coupling agent is easily affected by variations in kneading conditions, with the result that a variation in molecular weight is increased, leading to an increased variation in the fluidity of the composition. On the contrary, the resin of the present invention has a small coupling reactivity as mentioned above and it is therefore possible to reduce a variation in the fluidity of the resin composition even in the case of including glass fibers.

Also, the generated amount of $SO_2$ that is a decomposed gas from the polyarylene sulfide resin of the present invention is 0. 02 mg/g or less and a sulfur odor derived from the decomposed gas generated from the resin composition is reduced, with the result that a better working circumstance can be kept.

The polyarylene sulfide resin of the present invention and the composition containing the resin can be molded by known molding methods such as injection molding, extrusion molding and other molding methods. Molded articles obtained by molding these resin or composition are suitably used in various fields including automobile parts and electric/electronic parts.

## Examples

The present invention will be explained in detail by way of examples. However, the following examples are not intended to limit the present invention. The properties of a polyarylene sulfide (PAS) resin were measured in the following manner.

### (1) Coupling reactivity index (CRI)

CRI was obtained by the following equation.

$$CRI = \eta_2/\eta_1$$

$\eta_1$: Complex viscosity of a material A obtained by kneading a PAS resin.

$\eta_2$ : Complex viscosity of a material B obtained by kneading a mixture prepared by adding 2 parts by weight of an aminosilane based coupling agent to 100 parts by weight of a PAS resin and kneading.

(Kneading method)

A Laboplast controller manufactured by Seiwa Technica Ca., Ltd. was equipped with a two-shaft screw and a batch system reactor with a capacity of 30 cc to knead materials A and B in the following manner.

Material A: 15 g of a PAS resin was poured into the reactor and kneaded at 320°C at a screw rotation of 70 rpm for 5 minutes .

Material B: 15 g of a PAS resin and 0.3 g of an aminosilane based coupling agent (SH6020 (trade name), manufactured by Dow Corning Toray Co., Ltd.) were poured into the reactor and kneaded at 320°C at a screw rotation of 70 rpm for 5 minutes .

(Method of measuring complex viscosity)

Each complex viscosity of the materials A and B was measured using RMS manufactured by Rheometric Scientific Inc. in the following condition: 320°C, strain of 30% and frequency of 2.5 s-1.

(2) Amount of $SO_2$ generated

2 g of a PAS resin was heated (300°C, 60 minutes, in a nitrogen atmosphere) using a heating tube to trap generated gas by 10 ml of aqueous 1% hydrogen peroxide. The amount of $SO_4$ ions in this solution was measured by ion chromatography and converted into an amount per 1 g of the resin, and the converted amount was defined as the amount of $SO_2$ generated.

(3) Melt index ($MI_{10}$) under a load of 10 kg

A melt indexer manufactured by Toyo Seiki Seisaku-sho, Ltd. was used for measurement in the following condition: temperature: 300°C, load: 10 kg and orifice L/D = 20/1 . Melt index of the PAS resins of Example 4 and Comparative Example 2 was measured under a load of 2.16 kg.

(4) Solution viscosity

This was measured in the aforementioned condition and method.
The practical properties of the PAS resin composition were measured in the following manner.

(1) Spiral flow length (SFL)

The resin was injected using a 1-mm-thick spiral flow mold in a 30 ton injection molding machine (IS30EPN) manufactured by Toshiba Machine Co., Ltd. in the molding condition of an injection pressure of 98 MPa (setting: 49%), a resin temperature of 320°C, a mold temperature of 135°C and an injection time of 10 seconds to measure the length of the resin extending to the flow end as the spiral flow length.

(2) Bending strength

Using a 50 ton injection molding machine (J750EP) manufactured by The Japan Steel Works, Ltd., a test piece of 127 × 12.7 × 3.18 mm was molded at a resin temperature of 320°C and a mold temperature of 135°C. The bending strength was measured according to ASTM-790.

(3) Sulfur odor

When the test piece used in the test (2) was produced by injection molding, the odor around the molding machine was rated by a functional test. In Tables 2 and 3, a weak sulfur odor was rated as " × " and a strong sulfur odor was rated as "○".

Example 1

(Synthesis of a prepolymer)

(1) Preparation of lithium hydrosulfide

A raw material synthesizing vessel (1 $m^2$) equipped with a stirring blade was charged with 554 kg of N-methyl-2-pyrrolidone (NMP) and 100 kg of lithium hydroxide ($LiOH \cdot 1H_2O$). The temperature of the mixture was raised to 140°C at which the mixture was kept to remove water contained in raw material LiOH by batch distillation. After this operation was finished, 65 Nkτ of gaseous hydrogen sulfide ($H_2S$) was blown into the mixture while the mixture was kept at 130°C. This procedures allowed the reaction of the following equation (I) to proceed: specifically, lithium hydroxide was reacted with hydrogen sulfide to produce lithium hydrosulfide (LiSH).

$$LiOH + H_2S \rightarrow LiSH + H_2O \quad (I)$$

(2) Preparation of lithium sulfide

Thereafter, the blowing of hydrogen sulfide was stopped and the synthesizing vessel was raised to 205°C. With a rise in temperature, water by-produced when hydrogen sulfide was blown was removed by batch distillation while the reaction of the following formula (II) was proceeded. By this reaction, a mixture of 49.62 kg (1.08 kmol) of lithium sulfide ($Li_2S$) and lithium N-methylaminobutyrate (LMAB) was produced from lithium hydrosulfide.

$$2LiSH \rightarrow Li_2S + LMAB + H_2S \uparrow \quad (II)$$

(3) Synthesis of a prepolymer

After the reaction of the above formula (II) was finished, 154 kg (1.05 kmol) of paradichlorobenzene (PDCB) and 5.83 kg of pure water were poured into the synthetic vessel to practice a pre-condensation operation at 210°C for 5 hours to synthesize a prepolymer.

(Synthesis of a PAS resin)

To the prepolymer obtained in the above (3) were added 14.8 kg (0.10 kmol) of PDCB, 0.392 kg (0.00216 kmol) of 1, 2, 4-trichlorobenzene (TCB) and 80 kg of NMP. This mixture was poured into a reaction vessel of a single-stage CSTR (continuous stirring vessel type reactor) at a charge rate of 15.0 kg/hr to run a polymerization reaction (260°C) in the condition of an average retention time $\tau$ of 3 hours to synthesize a PAS resin. Next, the reaction solution discharged from the reaction vessel was introduced into a settling tank (260°C) to separate a reaction solution phase from a PAS resin phase. A washing liquid ($H_2O$/NMP mixture solution, containing $NH_4Cl$ as a neutralizing agent) was injected into the outlet port of the reaction vessel for the purpose of washing and removing lithium chloride contained in the PAS resin phase. The washing liquid was injected again into the high-molecular weight PAS resin phase withdrawn from the bottom of the settling tank, the both were contact-mixed and then separated in a settling tank. This washing/separating operation was repeated in three stages and the resulting PAS resin phase was introduced into an extruder with a degassing function to remove volatile solvents (mainly, NMP) . Then, the PAS resin phase was water-cooled and pelletized to obtain a PAS resin (PAS1) . The amount of this resin produced was about 2 kg/hr. The evaluation results of the properties of this resin are shown in Table 1.

Example 2

1.0 part by weight of the aforementioned aminosilane based coupling agent (SH6020) was added to 100 parts by weight of the PAS resin obtained in Example 1 and the mixture was melt-kneaded at 310°C by using a two-shaft extruder to pelletize. The properties of the resulting PAS resin (PAS2) obtained were evaluated (Table 1).

Example 3

A PAS resin (PAS3) was prepared in the same manner as in Example 2 except that an epoxysilane based coupling agent (SH6040 (trade name), manufactured by Dow Corning Toray Co., Ltd.) was used in place of the aminosilane based coupling agent and the properties of the PAS resin were evaluated (Table 1).

Example 4

A PAS resin (PAS4) was prepared in the same manner as in Example 1 except that no TCB was added after the prepolymer was prepared and the amount of PDCB was altered to 28.4 kg (0.192 kmol) and the properties of the PAS resin were evaluated (Table 1).

Example 5

A PAS resin (PAS5) was prepared in the same manner as in Example 1 except that the amount of TCB added after the prepolymer was prepared was altered to 0. 980 kg (0. 0054 kmol) and the properties of the PAS resin were

evaluated (Table 1).

Comparative Example 1

A 1 $m^2$ reactor was charged with 128.15 kg of flake-like sodium sulfide (60. 9% by weight of $Na_2S$) and 300.0 kg of NMP. The mixture was raised up to 204°C with stirring in a nitrogen stream to distill 30.67 kg of water. Thereafter, the autoclave was closed, cooled to 180°C and then charged with 150.00 kg (mol ratio to $Na_2S$: about 0.980) and 120 kg of NMP, to start raising the temperature. The mixture was reacted with stirring at 220°C for 3 hours and then 0.363 kg (about 0.2 mol% based on sodium sulfide) of TCB was introduced under pressure into the reactor by using a small high-pressure pump. Then, the temperature of the system was raised to 260°C at which the reaction mixture was stirred for 3 hours and then the temperature was dropped.

The obtained slurry was subjected to filtration using a filter and the collected slurry was washed with 80°C hot water three times and then dried at 120°C for about 5 hours in a hot air circulating drier to obtain a white powder-like PAS resin (PAS6) . The evaluation results of the properties of this resin are shown in Table 1.

Comparative Example 2

A PAS resin (PAS7) was prepared in the same manner as in Comparative Example 1 except that no TCB was used to evaluate the properties of the resin (Table 1).

Table 1

| | PAS resin | | | |
|---|---|---|---|---|
| | CRI | Amount of $SO_2$ generated (mg／g) | $MI_{10}$ (g／10分) | Solution viscosity (dL／g) |
| Example 1 | 0. 92 | 0. 006 | 30. 5 | 0. 22 |
| Example 2 | 0. 99 | 0. 004 | 29. 6 | 0. 22 |
| Example 3 | 1. 00 | 0. 005 | 29. 1 | 0. 23 |
| Example 4 | 0. 95 | 0. 005 | 59. 0*1 | 0. 16 |
| Example 5 | 0. 89 | 0. 006 | 28. 9 | 0. 22 |
| Comparative Example 1 | 4. 1 | 0. 025 | 84. 3 | 0. 20 |
| Comparative Example 2 | 2. 9 | 0. 028 | 61. 3*2 | 0. 16 |

＊1 ： Measured under a load of 2.16 kg.

Examples 6 to 12, Comparative Examples 3 to 7

(PAS resin compositions)

The aforementioned PAS1 to PAS7, LN2 (commercially available PAS resin, trade name, CRI: 3.7, amount of $SO_2$ generated: 0.024 mg/g) manufactured by DICEP and LV3 (commercially available PAS resin, trade name, CRI: 3.2, amount of $SO_2$ generated: 0.022 mg/g) manufactured by DICEP were respectively pelletized using a two-shaft extruder at 310°C while side-feeding glass fibers (trade name: JAF591, manufactured by Asahi Fiber Glass Co.) from the downstream of the extruder (PAS resin/glass fiber= 60:40 (weight ratio)). It is to be noted that 0.6 parts by weight of the aforementioned aminosilane based coupling agent (SH6020) was added in Example 9 and Comparative Example 4 and 0.6 parts by weight of the aforementioned epoxysilane based coupling agent (SH6040) was added in Example 10 during melt-kneading. The resin composition was prepared three times each on a different experimental day to confirm reproducibility. The evaluation results of the practical properties of the resulting resin composition obtained are shown in Tables 2 and 3.

Table 2

| | | PAS resin | PAS resin composition (PAS resin/glass fiber = 60 : 40 ( weight ratio)) | | |
|---|---|---|---|---|---|
| | | | SFL (mm) | Bending strength (MPa) | Sulfur odor |
| Example 6 | 1st<br>2nd<br>3rd | PAS1 | 152<br>154<br>152 | 252<br>255<br>255 | ○ |
| Example 7 | 1st<br>2nd<br>3rd | PAS2 | 139<br>139<br>137 | 275<br>277<br>279 | ○ |
| Example 8 | 1st<br>2nd<br>3rd | PAS3 | 132<br>134<br>135 | 272<br>272<br>276 | ○ |
| Example 9 *1 | 1st<br>2nd<br>3rd | PAS1 | 142<br>143<br>140 | 273<br>270<br>269 | ○ |
| Example 10 *2 | 1st<br>2nd<br>3rd | PAS1 | 141<br>139<br>139 | 272<br>274<br>271 | ○ |
| Example 11 | 1st<br>2nd<br>3rd | PAS4 | 298<br>301<br>297 | 208<br>205<br>205 | ○ |
| Example 12 | 1st<br>2nd<br>3rd | PAS5 | 148<br>146<br>145 | 249<br>250<br>255 | ○ |

*1 : 0.6 parts by weight of an aminosilane based coupling agent (SH6020) was added during melt-kneading.

*2 : 0.6 parts by weight of an epoxysilane based coupling agent (SH6040) was added during melt-kneading

Table 3

| | | PAS resin | PAS resin composition (PAS resin/glass fiber = 60 : 40 ( weight ratio)) | | |
|---|---|---|---|---|---|
| | | | SFL (mm) | Bending strength (MPa) | Sulfur odor |
| Comparative Example 3 | 1st | PAS6 | 160 | 250 | × |
| | 2nd | | 146 | 245 | |
| | 3rd | | 169 | 252 | |
| Comparative Example 4 *1 | 1st | PAS6 | 117 | 271 | × |
| | 2nd | | 128 | 272 | |
| | 3rd | | 105 | 265 | |
| Comparative Example 5 | 1st | PAS7 | 345 | 199 | × |
| | 2nd | | 303 | 210 | |
| | 3rd | | 322 | 202 | |
| Comparative Example 6 | 1st | LN2 | 164 | 250 | × |
| | 2nd | | 176 | 245 | |
| | 3rd | | 161 | 253 | |
| Comparative Example 7 | 1st | LV3 | 170 | 250 | × |
| | 2nd | | 145 | 252 | |
| | 3rd | | 151 | 253 | |

*1 : 0.6 parts by weight of an aminosilane based coupling agent (SH6020) was added during melt-kneading.

Industrial Applicability

The present invention can provide a polyarylene sulfide resin which is reduced in the variation in fluidity between lots and in the generation of a sulfur odor during molding, a composition containing the resin and processes for producing these resin and composition.

## Claims

1. A polyarylene sulfide resin having an index of coupling reactivity at 320°C of 2.0 or less,
   the amount of $SO_2$ generated from the resin at 300°C being 0.02 mg/g or less.

2. A process for producing a polyarylene sulfide resin according to claim 1, the process comprising polymerizing a polyfunctional halogenated aromatic compound with lithium sulfide in a non-protonic organic solvent.

3. A process for producing a polyarylene sulfide resin according to claim 2, the process further comprising washing the polymer in a molten state after the polymerization.

4. A process for producing a polyarylene sulfide according to claim 3, the process further comprising adding a silane based coupling agent to the washed polymer and melt-kneading the mixture.

5. A polyarylene sulfide resin composition comprising a polyarylene sulfide resin according to claim 1 and an inorganic filler.

6. A polyarylene sulfide resin composition according to claim 5, the composition further comprising a silane based coupling agent.

7. A process for producing a polyarylene sulfide resin composition according to claim 6, the process comprising:

   blending a polyarylene sulfide resin according to claim 1 with an inorganic filler;
   melt-kneading the mixture; and
   adding a silane based coupling agent at the time of the melt-kneading.

**INTERNATIONAL SEARCH REPORT**

International application No.
PCT/JP03/15141

A. CLASSIFICATION OF SUBJECT MATTER
Int.Cl[7] C08G75/04, C08L81/02, C08K3/00, C08K5/5415

According to International Patent Classification (IPC) or to both national classification and IPC

B. FIELDS SEARCHED

Minimum documentation searched (classification system followed by classification symbols)
Int.Cl[7] C08G75/00-75/23, C08L81/00-81/10, C08K3/00-13/08

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-293939 A (Petroleum Energy Center), 09 October, 2002 (09.10.02), Claims; Par. No. [0027]; examples & WO 02/81548 A1 | 1-7 |
| X | JP 2002-293938 A (Petroleum Energy Center), 09 October, 2002 (09.10.02), Claims; Par. No. [0026]; examples & WO 02/81550 A1 | 1-7 |
| X<br>Y | JP 62-253622 A (Idemitsu Petrochemical Co., Ltd.), 05 November, 1987 (05.11.87), Claims; page 7, lower right column, line 13 to page 8, upper left column, line 12 | 1-3,5<br>4,6,7 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 February, 2004 (05.02.04) | 17 February, 2004 (17.02.04) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No.
PCT/JP03/15141

C (Continuation). DOCUMENTS CONSIDERED TO BE RELEVANT

| Category* | Citation of document, with indication, where appropriate, of the relevant passages | Relevant to claim No. |
|---|---|---|
| Y | JP 9-272801 A (Tonen Chemical Corp.), 21 October, 1997 (21.10.97), Claims; Par. No. [0034]; examples (Family: none) | 1-7 |
| Y | JP 8-253587 A (Tonen Chemical Corp.), 01 October, 1996 (01.10.96), Claims; examples (Family: none) | 1-7 |
| Y | JP 8-170016 A (Tonen Chemical Corp.), 02 July, 1996 (02.07.96), Claims; Par. No. [0033]; examples (Family: none) | 1-7 |
| Y | JP 5-239212 A (Tonen Corp.), 17 September, 1993 (17.09.93), CLaims; Par. No. [0030]; examples (Family: none) | 1-7 |

Form PCT/ISA/210 (continuation of second sheet) (July 1998)